(19) Europäisches Patentamt
European Patent Office
Office européen des brevets

(11) **EP 4 163 110 A1**

(12) **EUROPEAN PATENT APPLICATION**
published in accordance with Art. 153(4) EPC

(43) Date of publication:
**12.04.2023 Bulletin 2023/15**

(21) Application number: **21817670.9**

(22) Date of filing: **01.06.2021**

(51) International Patent Classification (IPC):
**B32B 27/32** (2006.01)   **B29C 55/00** (2006.01)
**C08K 5/09** (2006.01)   **C08K 5/101** (2006.01)
**C08L 23/04** (2006.01)

(52) Cooperative Patent Classification (CPC):
**B29C 55/00; B32B 27/32; C08K 5/09; C08K 5/101; C08L 23/04**

(86) International application number:
**PCT/JP2021/020835**

(87) International publication number:
**WO 2021/246401 (09.12.2021 Gazette 2021/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.06.2020  JP 2020098748**

(71) Applicant: **Tosoh Corporation**
**Yamaguchi 746-8501 (JP)**

(72) Inventors:
• **ARIDOME Norifumi**
**Izumi-shi, Osaka 594-1144 (JP)**

• **MORI Toyoichiro**
**Izumi-shi, Osaka 594-1144 (JP)**
• **HAMAGUCHI Kiyotaka**
**Izumi-shi, Osaka 594-1144 (JP)**
• **KODA Shingo**
**Yokkaichi-shi, Mie 510-8540 (JP)**
• **FUJII Yoshinao**
**Yokkaichi-shi, Mie 510-8540 (JP)**

(74) Representative: **Vossius & Partner**
**Patentanwälte Rechtsanwälte mbB**
**Siebertstraße 3**
**81675 München (DE)**

(54) **HEAT-SEALING POLYETHYLENE LAMINATE**

(57)     Provided is a polyethylene laminate, which has high recyclability, is excellent in physical characteristics, such as rigidity, strength, and impact resistance, and is excellent in heat-sealing property. The heat-sealing polyethylene laminate of the present invention includes: a stretched film of an ultra-high molecular weight polyethylene-based resin (A) having a viscosity-average molecular weight of from 300,000 to 15,000,000; and a low molecular weight ethylene-based resin layer, which is arranged on at least one side of the stretched film of the ultra-high molecular weight polyethylene-based resin (A) and includes an ethylene-based resin.

Fig.1

EP 4 163 110 A1

**Description**

Technical Field

The present invention relates to a heat-sealing polyethylene laminate.

Background Art

A polyethylene film has been used in a packaging material because the film has moderate flexibility, is excellent in transparency, moisture resistance, chemical resistance, and the like, and is inexpensive. The polyethylene film, which has a melting point of from 100°C to 140°C, is useful as a packaging material having a heat-sealing property.

However, the polyethylene film is low in rigidity, impact resistance, heat resistance, and the like, and hence there are some applications where the film cannot be used alone from the viewpoint of durability. To solve such problem, a packaging material obtained by laminating the polyethylene film and any other resin film (e.g., a polyester film or a polyamide film) has been frequently used (e.g., Patent Literature 1).

Meanwhile, in recent years, social problems such as waste plastics have been attracting attention, and hence an improvement in recyclability of a packaging material has been required along with a growing demand for the construction of a circulating society. Such a packaging material obtained by combining films made of dissimilar materials as described above involves a problem in that the packaging material is hardly subjected to recycling, such as material recycling or chemical recycling. In contrast, a packaging material formed by laminating a stretched polyethylene film and an unstretched polyethylene film has been proposed as a packaging material including resin materials of the same kind (e.g., Patent Literatures 2 and 3). The stretched polyethylene film is used for compensating for the mechanical characteristics of the unstretched polyethylene film. However, even the stretched polyethylene film does not have mechanical characteristics comparable to those of a biaxially stretched polyamide film and a biaxially stretched polyester film, and hence the above-mentioned packaging material may be insufficient in heat-sealing strength. In addition, the above-mentioned films are laminated via an adhesive, and hence there is a problem in that the recyclability of the packaging material is low.

In addition, an ultra-high molecular weight polyethylene film has been proposed as a polyethylene film excellent in rigidity, heat resistance, and strength (e.g., Patent Literature 4). However, the strength of a general ultra-high molecular weight polyethylene film is lower than those of the biaxially stretched polyamide film and the biaxially stretched polyester film. As a result, the ultra-high molecular weight polyethylene film has low heat-sealing strength, and is hence not suitable particularly for a packaging material for a heavy object.

Citation List

Patent Literature

[PTL 1] JP 2005-104525 A
[PTL 2] JP 2019-171860 A
[PTL 3] JP 2019-529165 A
[PTL 4] JP 1994-262679 A

Summary of Invention

Technical Problem

The present invention has been made to solve the above-mentioned problems, and an object of the present invention is to provide a polyethylene laminate, which has high recyclability, is excellent in physical characteristics, such as rigidity, strength, and impact resistance, and is excellent in heat-sealing property.

Solution to Problem

According to one aspect of the present invention, there is provided a heat-sealing polyethylene laminate, including: a stretched film of an ultra-high molecular weight polyethylene-based resin (A) having a viscosity-average molecular weight of from 300,000 to 15,000,000; and a low molecular weight ethylene-based resin layer, which is arranged on at least one side of the stretched film of the ultra-high molecular weight polyethylene-based resin (A) and includes an ethylene-based resin.

In one embodiment, the heat-sealing polyethylene laminate further includes an anchor coat layer between the stretched film of the ultra-high molecular weight polyethylene-based resin (A) and the low molecular weight ethylene-based resin layer.

In one embodiment, the anchor coat layer has a thickness of from 0.01 $\mu$m to 0.7 $\mu$m.

In one embodiment, the stretched film of the ultra-high molecular weight polyethylene-based resin satisfies all of the following characteristics (i) to (iv):

(i) the stretched film has a tensile strength at 23°C of 100 MPa or more;
(ii) the stretched film has a tensile modulus of elasticity at 23°C of 1,500 MPa or more;
(iii) the stretched film has a 30 $\mu$m-converted moisture permeability of 15 g/m$^2$·d or less; and
(iv) the stretched film has an endothermic peak at less than 140°C and an endothermic peak at 140°C or more in DSC measurement thereof, and the endothermic peak at 140°C or more reduces or disappears at a time of a second temperature increase thereof.

In one embodiment, the stretched film of the ultra-high molecular weight polyethylene-based resin (A) contains the ultra-high molecular weight polyethylene-based resin (A), and a condensed hydroxy fatty acid and/or an alcohol ester thereof (C).

In one embodiment, a content of the condensed hydroxy fatty acid and/or the alcohol ester thereof (C) is from 0.1 part by weight to 10 parts by weight with respect to 100 parts by weight of resins in the stretched film of the ultra-high molecular weight polyethylene-based resin.

In one embodiment, the stretched film of the ultra-high molecular weight polyethylene-based resin (A) contains the ultra-high molecular weight polyethylene-based resin (A), and a thermoplastic resin (B).

In one embodiment, the ethylene-based resin for forming the low molecular weight ethylene-based resin layer contains at least one kind selected from high-pressure method low-density polyethylene, an ethylene-$\alpha$-olefin copolymer, an ethylene-vinyl acetate copolymer, and an ethylene-acrylic acid ester copolymer.

In one embodiment, the ethylene-based resin for forming the low molecular weight ethylene-based resin layer has a density of from 860 kg/m$^3$ to 955 kg/m$^3$.

In one embodiment, the low molecular weight ethylene-based resin layer contains a tackifier, and a content of the tackifier is from 1 part by weight to 30 parts by weight with respect to 100 parts by weight of the ethylene-based resin for forming the low molecular weight ethylene-based resin layer.

In one embodiment, the tackifier is at least one kind selected from the group consisting of: a petroleum resin; a terpene resin; and a rosin-based resin.

According to another aspect of the present invention, there is provided a recycled polyethylene pellet. The recycled polyethylene pellet includes the above-mentioned heat-sealing polyethylene laminate.

Advantageous Effects of Invention

According to the present invention, there can be provided the following polyethylene laminate: the laminate may include only the polyethylene-based resins, and hence the laminate has high recyclability, is excellent in physical characteristics, such as rigidity, strength, and impact resistance, and is excellent in heat-sealing property. The polyethylene film of the present invention is advantageous in terms of recyclability because the film may be formed by extrusion lamination, that is, may be formed without use of any adhesive or the like.

Brief Description of Drawings

FIG. **1** is a schematic sectional view of a polyethylene laminate according to one embodiment of the present invention.

FIG. **2** is a schematic sectional view of a polyethylene laminate according to another embodiment of the present invention.

FIG. **3** is a schematic sectional view of a polyethylene laminate according to still another embodiment of the present invention.

Description of Embodiments

A. Heat-sealing Polyethylene Laminate

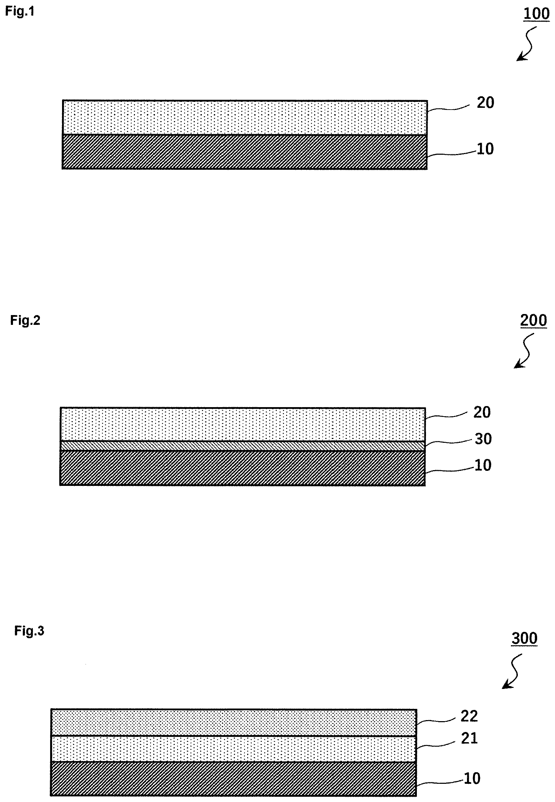

FIG. **1** is a schematic sectional view of a heat-sealing polyethylene laminate according to one embodiment of the present invention. A heat-sealing polyethylene laminate **100** includes: a stretched film **10** of an ultra-high molecular weight polyethylene-based resin (A); and a low molecular weight ethylene-based resin layer **20** arranged on at least one side of the stretched film **10** of the ultra-high molecular weight polyethylene-based resin. The ultra-high molecular weight polyethylene-based resin (A) for forming the stretched film **10** has a viscosity-average molecular weight of from 300,000 to 15,000,000. In one embodiment, the polyethylene laminate may include any appropriate other layer. In one embodiment, when the heat-sealing polyethylene laminate includes a layer formed of a material except the polyethylene-based resin, the content of the material except the polyethylene-based resin in the polyethylene laminate is 10 wt% or less. The heat-sealing polyethylene laminate preferably includes only layers formed of ethylene-based resins. In one embodiment, the stretched film **10** of the ultra-high molecular weight polyethylene-based resin and the low molecular weight ethylene-based resin layer **20** are laminated directly (i.e., without via any other layer).

FIG. **2** is a schematic sectional view of a heat-sealing polyethylene laminate according to another embodiment of the present invention. A heat-sealing polyethylene laminate **200** further includes an anchor coat layer **30** between the stretched film **10** of the ultra-high molecular weight polyethylene-based resin and the low molecular weight ethylene-based resin layer **20**.

FIG. **3** is a schematic sectional view of a heat-sealing polyethylene laminate according to still another embodiment of the present invention. The low molecular weight ethylene-based resin layer **20** may be a single layer as illustrated in each of FIG. **1** and FIG. **2**, or may be a plurality of layers as illustrated in FIG. **3** (two layers in the illustrated example). A heat-sealing polyethylene laminate **300** of FIG. **3** includes a low molecular weight ethylene-based resin layer (I) **21** and a low molecular weight ethylene-based resin layer (II) **22** as the low molecular weight ethylene-based resin layers **20**.

The heat-sealing polyethylene laminate has a heat-sealing property. In the present invention, the heat-sealing property means the following characteristic: when films (heat-sealing polyethylene laminates) are laminated, and the films are heated, a contact surface between the films melts to join the films to each other. In one embodiment, the heat-sealing polyethylene laminate shows the heat-sealing property at a temperature of 170°C or less (preferably 150°C or less, more preferably from 100°C to 130°C). In the heat-sealing polyethylene laminate, the heat-sealing property may be expressed by bringing the low molecular weight ethylene-based resin layers into contact with each other. The "heat-sealing polyethylene laminate" is hereinafter also simply referred to as "polyethylene laminate."

As described above, the viscosity-average molecular weight of the ultra-high molecular weight polyethylene-based resin is from 300,000 to 15,000,000. The "ultra-high molecular weight polyethylene-based resin" and a "low molecular weight ethylene-based resin" are distinguished from each other by their viscosity-average molecular weights. That is, the term "low molecular weight ethylene-based resin" as used herein means an ethylene-based resin having a viscosity-average molecular weight smaller than that of the "ultra-high molecular weight polyethylene-based resin," and in one embodiment, means an ethylene-based resin having a viscosity-average molecular weight of less than 300,000. In this description, a polyethylene-based resin (e.g., the ultra-high molecular weight polyethylene-based resin or the low molecular weight ethylene-based resin) means a resin containing 50 mol% or more of a constituent unit derived from ethylene.

In one embodiment, the stretched film of the ultra-high molecular weight polyethylene-based resin described above (hereinafter also referred to as "ultra-high molecular weight stretched film A") satisfies all of the following characteristics (i) to (iv):

   (i) the stretched film has a tensile strength at 23°C of 100 MPa or more;
   (ii) the stretched film has a tensile modulus of elasticity at 23°C of 1,500 MPa or more;
   (iii) the stretched film has a 30 $\mu$m-converted moisture permeability of 15 g/m$^2$·d or less; and
   (iv) the stretched film has an endothermic peak at less than 140°C and an endothermic peak at 140°C or more in DSC measurement thereof, and the endothermic peak at 140°C or more reduces or disappears at the time of the second temperature increase thereof.

The ultra-high molecular weight stretched film A to be used in the present invention is particularly useful because the film can achieve both of mechanical characteristics and low moisture permeability in a balanced manner as described above.

The polyethylene laminate of the present invention is excellent in heat-sealing property because the laminate includes the low molecular weight ethylene-based resin layer. In addition, the polyethylene laminate is excellent in physical characteristics, such as rigidity, strength, and impact resistance, because the laminate includes the ultra-high molecular weight stretched film A that is excellent in mechanical characteristics as described above. Further, the polyethylene laminate is excellent in recyclability because the laminate may include the resins of the same kind.

The thickness of the polyethylene laminate is preferably from 20 um to 300 $\mu$m, more preferably from 30 $\mu$m to 200 $\mu$m.

A-1. Stretched Film of Ultra-high Molecular Weight Polyethylene-based Resin (Ultra-high Molecular Weight Stretched Film A)

The thickness of the ultra-high molecular weight stretched film A is preferably from 15 um to 300 $\mu$m, more preferably from 20 um to 200 um, still more preferably from 30 um to 100 um. When the thickness falls within such ranges, a film having preferred rigidity can be obtained.

The crystal orientation degree of the ultra-high molecular weight stretched film A is preferably from 0.94 to 1, more preferably from 0.95 to 1, still more preferably 0.96 or more and less than 1. When the crystal orientation degree falls within such ranges, the ultra-high molecular weight stretched film A having low moisture permeability can be obtained, and the ultra-high molecular weight stretched film A excellent in rigidity and strength can be obtained. The crystal orientation degree may be measured as follows: an azimuth angle distribution curve derived from a (110) plane present at 2θ is determined from the wide-angle X-ray diffraction image of the film obtained by wide-angle X-ray diffractometry; and the half-width of a peak present at each of 0° and 180° is measured, followed by the measurement of the crystal orientation degree from the following equation.

$$\texttt{Crystal orientation degree=(360-half-width×2)/360}$$

The tensile strength of the ultra-high molecular weight stretched film A at 23°C is preferably from 100 MPa to 700 MPa, more preferably from 120 MPa to 500 MPa, still more preferably from 150 MPa to 400 MPa, particularly preferably from 200 MPa to 350 MPa. When the tensile strength falls within such ranges, the ultra-high molecular weight stretched film A excellent in mechanical strength can be obtained. The tensile strength may be measured in conformity with JIS K 7161. In one embodiment, the tensile strength means a tensile strength in a machine direction (MD) at the time of the production of the ultra-high molecular weight stretched film A (at the time of molten sheet roll forming).

The tensile modulus of elasticity of the ultra-high molecular weight stretched film A at 23°C is preferably from 3,000 MPa to 20,000 MPa, more preferably from 3,200 MPa to 15,000 MPa, still more preferably from 4,000 MPa to 12,000 MPa. When the tensile modulus of elasticity falls within such ranges, a polyethylene laminate suppressed from causing shrinkage in its widthwise direction and curling can be obtained. The modulus of elasticity may be measured in conformity with JIS K 7161. In one embodiment, the ensile modulus of elasticity means a ensile modulus of elasticity in a machine direction (MD) at the time of the production of the ultra-high molecular weight stretched film A (at the time of molten sheet roll forming).

The 30 $\mu$m-converted moisture permeability of the polyethylene laminate is preferably 10 g/m$^2$·d or less, more preferably 9.5 g/m$^2$·d or less. When the 30 um-converted moisture permeability falls within such ranges, in the case where the polyethylene laminate is used as a packaging material, its contents can be significantly prevented from rotting. Although the 30 $\mu$m-converted moisture permeability of the polyethylene laminate is preferably as low as possible, its lower limit value is, for example, 1 g/m$^2$·d, more preferably 0.5 g/m$^2$·d. A moisture permeability is a value determined by measuring the amount (g) of water vapor passing through a sample having a diameter of 80 mm in 24 hours under the conditions of a temperature of 40°C and a humidity of 90%RH in conformity with the moisture permeability test of JIS K 7129 (humidity detection sensor method). In addition, the 30 $\mu$m-converted moisture permeability is calculated by multiplying the moisture permeability obtained through such measurement as described above by a certain ratio (30 $\mu$m/polyethylene laminate thickness ($\mu$m)).

As described above, the ultra-high molecular weight stretched film A may have an endothermic peak L at less than 140°C and an endothermic peak H at 140°C or more in its DSC measurement at the time of its first temperature increase. The endothermic peak L is preferably present at from 110°C to 139°C, and is more preferably present at from 125°C to 139°C. The endothermic peak H is preferably present at from 142°C to 160°C, and is more preferably present at from 144°C to 155°C. The ultra-high molecular weight stretched film A of the present invention may have a plurality of endothermic peaks as described above, and hence the ultra-high molecular weight stretched film A excellent in mechanical strength and heat resistance can be obtained. Further, the ultra-high molecular weight stretched film A is characterized in that the endothermic peak H at 140°C or more may reduce or disappear in the DSC measurement at the time of its second temperature increase. The presence of the endothermic peak H that disappears (or reduces) at the time of the second temperature increase as described above means that the ultra-high molecular weight stretched film A of the present invention preferably contains a highly oriented polymer. The endothermic peaks may be measured with a DSC by: increasing the temperature of the stretched film from a start temperature of 30°C to 230°C at a rate of temperature increase of 10°C/min; holding the temperature at 230°C for 3 minutes; then decreasing the temperature to 30°C at a rate of temperature decrease of 10°C/min; and then further increasing the temperature to 230°C at the same rate.

In one embodiment, the ultra-high molecular weight stretched film A may be obtained by forming a resin composition containing the ultra-high molecular weight polyethylene-based resin (A) through molten sheet roll forming. In one embodiment, the ultra-high molecular weight stretched film A (i.e., the resin composition) contains a thermoplastic resin (B). In addition, in one embodiment, the ultra-high molecular weight stretched film A (i.e., the resin composition) contains a condensed hydroxy fatty acid and/or an alcohol ester thereof (C) (hereinafter also simply referred to as "compound (C)"). The addition of the thermoplastic resin (B) and/or the compound (C) can provide a resin composition excellent in formability by the molten sheet roll forming. The molten sheet roll forming refers to a forming method including rolling the resin composition between two or more rolls to form a film having a predetermined thickness (details about the method are described later).

(Ultra-high Molecular Weight Polyethylene-based Resin (A))

As described above, the viscosity-average molecular weight of the ultra-high molecular weight polyethylene-based resin (A) is from 300,000 to 15,000,000. The use of the ultra-high molecular weight polyethylene-based resin (A) having such viscosity-average molecular weight can provide the ultra-high molecular weight stretched film A excellent in abrasion resistance, self-lubricating property, impact resistance, low-temperature characteristic, and chemical resistance. The viscosity-average molecular weight of the ultra-high molecular weight polyethylene-based resin (A) is preferably from 500,000 to 8,000,000, more preferably from 1,000,000 to 6,000,000. When the viscosity-average molecular weight falls within such ranges, the ultra-high molecular weight stretched film A excellent in rigidity and strength can be obtained. The ultra-high molecular weight stretched film A may include two or more kinds of the ultra-high molecular weight polyethylene-based resins (A) having different molecular weights. The viscosity-average molecular weight (Mv) may be measured by viscometry stipulated in ASTM D4020. Specifically, the viscosity-average molecular weight (Mv) may be determined through use of the following expression (1) by measuring a limiting viscosity ($\eta$ (dl/g)) based on the viscometry stipulated in ASTM D4020.

$$Mv = 5.37 \times 10^4 \eta^{1.37} \qquad \cdots (1)$$

The limiting viscosity of the ultra-high molecular weight polyethylene-based resin (A) is, for example, 3.5 dl/g or more. The upper limit of the limiting viscosity of the ultra-high molecular weight polyethylene-based resin is, for example, 60 dl/g or less.

The ultra-high molecular weight polyethylene-based resin (A) may be a homopolymer of ethylene, or may be a copolymer of ethylene and another monomer copolymerizable with the ethylene. In the ultra-high molecular weight polyethylene-based resin (A), the content of a constituent unit derived from ethylene is preferably 80 mol% or more, more preferably 90 mol% or more, still more preferably 95 mol% or more.

As the other monomer copolymerizable with ethylene, there is given, for example, an $\alpha$-olefin having 3 or more carbon atoms (preferably 3 to 20 carbon atoms). Examples of the $\alpha$-olefin having 3 or more carbon atoms include propylene, 1-butene, isobutene, 1-pentene, 2-methyl-1-butene, 3-methyl-1-butene, 1-hexene, 3-methyl-1-pentene, 4-methyl-1-pentene, 1-heptene, 1-octene, 1-decene, 1-dodecene, 1-tetradecene, 1-hexadecene, 1-octadecene, and 1-icosene.

The ultra-high molecular weight polyethylene-based resin (A) may be produced by any appropriate method. The ultra-high molecular weight polyethylene-based resin (A) may be obtained, for example, by polymerizing the above-mentioned monomer in the presence of any appropriate catalyst by a method described in JP 58-83006 A.

The content of the ultra-high molecular weight polyethylene-based resin (A) is preferably from 10 parts by weight to 90 parts by weight, more preferably from 20 parts by weight to 80 parts by weight, particularly preferably from 30 parts by weight to 70 parts by weight with respect to 100 parts by weight of the resins in the ultra-high molecular weight stretched film A.

(Thermoplastic Resin (B))

The viscosity-average molecular weight of the thermoplastic resin (B) is not particularly limited as long as the viscosity-average molecular weight is smaller than the viscosity-average molecular weight of the ultra-high molecular weight polyethylene-based resin (A). The viscosity-average molecular weight of the thermoplastic resin (B) is, for example, 1,000,000 or less, preferably less than 300,000. When the viscosity-average molecular weight falls within such ranges, the addition of the thermoplastic resin (B) to the resin composition for forming the ultra-high molecular weight stretched film A can improve the fluidity of the resin composition. In one embodiment, the viscosity-average molecular weight of the thermoplastic resin (B) is 200,000 or less. When the viscosity-average molecular weight falls within such range, a resin composition particularly excellent in formability can be obtained.

The melt flow rate of the thermoplastic resin (B) at 190°C and 2.16 kgf is preferably from 0.01 g/10 min to 150 g/10 min, more preferably from 0.1 g/10 min to 100 g/10 min, still more preferably from 10 g/10 min to 90 g/10 min, particularly preferably from 20 g/10 min to 80 g/10 min. When the melt flow rate falls within such ranges, there can be obtained the ultra-high molecular weight stretched film A, which is particularly excellent in formability and sufficiently exhibits characteristics derived from the ultra-high molecular weight polyethylene-based resin (A).

As the thermoplastic resin (B), there are given, for example, olefin-based resins (for example, a homopolymer of an α-olefin and a copolymer including two or more kinds of α-olefins).

The α-olefin for forming the thermoplastic resin (B) is preferably an α-olefin having 2 to 10 carbon atoms, more preferably an α-olefin having 2 to 8 carbon atoms, still more preferably ethylene, propylene, or 1-butene.

In one embodiment, a polyethylene-based resin except the ultra-high molecular weight polyethylene-based resin (A) is used as the thermoplastic resin (B). In the polyethylene-based resin, the content of a constituent unit derived from ethylene is preferably 80 mol% or more, more preferably 90 mol% or more, still more preferably 95 mol% or more. As a constituent unit except the constituent unit derived from ethylene, there is given a constituent unit derived from a monomer copolymerizable with ethylene, and examples thereof include constituent units derived from propylene, 1-butene, isobutene, 1-pentene, 2-methyl-1-butene, 3-methyl-1-butene, 1-hexene, 3-methyl-1-pentene, 4-methyl-1-pentene, 1-heptene, 1-octene, 1-decene, 1-dodecene, 1-tetradecene, 1-hexadecene, 1-octadecene, and 1-icosene.

The melt flow rate of the polyethylene-based resin at 190°C and 2.16 kgf is preferably from 0.01 g/10 min to 150 g/10 min, more preferably from 0.1 g/10 min to 100 g/10 min, still more preferably from 10 g/10 min to 90 g/10 min, particularly preferably from 20 g/10 min to 80 g/10 min. When the melt flow rate falls within such ranges, there can be obtained the ultra-high molecular weight stretched film A, which is particularly excellent in formability and sufficiently exhibits characteristics derived from the ultra-high molecular weight polyethylene-based resin (A).

In another embodiment, a propylene-based resin is used as the thermoplastic resin (B). The propylene-based resin is advantageous in that the resin is excellent in compatibility with the ultra-high molecular weight polyethylene-based resin (A). The propylene-based resin may be a homopolymer of propylene, or may be a copolymer of propylene and a monomer copolymerizable with propylene. Examples of the copolymer include: random polypropylene including a constituent unit derived from propylene and a constituent unit derived from ethylene; block polypropylene including a constituent unit derived from propylene and a constituent unit derived from ethylene; a polypropylene terpolymer including a constituent unit derived from propylene, a constituent unit derived from ethylene, and a constituent unit derived from 1-butene; syndiotactic polypropylene; atactic polypropylene; and long-chain branching polypropylene. Those resins may be used alone or in combination thereof. The content of the constituent unit derived from propylene in the propylene-based resin is preferably 50 mol% or more, more preferably 80 mol% or more, still more preferably 90 mol% or more, yet still more preferably 95 mol% or more.

The melt flow rate of the propylene-based resin at 230°C and 2.16 kgf is preferably from 0.1 g/10 min to 1,000 g/10 min, more preferably from 0.5 g/10 min to 800 g/10 min, still more preferably from 1 g/10 min to 500 g/10 min. When the melt flow rate falls within such ranges, there can be obtained the ultra-high molecular weight stretched film A, which is particularly excellent in formability and sufficiently exhibits characteristics derived from the ultra-high molecular weight polyethylene-based resin (A).

The content of the thermoplastic resin (B) is preferably from 20 parts by weight to 95 parts by weight, more preferably from 30 parts by weight to 85 parts by weight, still more preferably from 40 parts by weight to 80 parts by weight with respect to 100 parts by weight of the resins in the ultra-high molecular weight stretched film A. When the content falls within such ranges, a resin composition excellent in formability can be prepared, and the ultra-high molecular weight stretched film A that sufficiently exhibits characteristics derived from the ultra-high molecular weight polyethylene-based resin (A) can be obtained.

(Condensed Hydroxy Fatty Acid and/or Alcohol Ester thereof (C))

The incorporation of the condensed hydroxy fatty acid and/or the alcohol ester thereof (C) can improve the fluidity of the above-mentioned resin composition, and as a result, can provide the ultra-high molecular weight stretched film A excellent in formability by molten sheet roll forming.

The condensed hydroxy fatty acid may be obtained by subjecting a hydroxy fatty acid to dehydration condensation. The condensed hydroxy fatty acid may be obtained, for example, by adding an alkali catalyst such as caustic soda to a hydroxy fatty acid and removing reaction water under heating, to thereby subject the hydroxy fatty acid to dehydration condensation.

The condensed hydroxy fatty acid is a condensate of a hydroxy fatty acid, and the condensation degree thereof is preferably 2 or more, more preferably 4 or more. The upper limit of the condensation degree of the condensed hydroxy fatty acid is, for example, 20. The condensation degree may be determined by calculation based on an acid value of a hydroxy fatty acid as a raw material and an acid value of the hydroxy fatty acid after a condensation reaction.

The hydroxy fatty acid is a fatty acid having one or more hydroxy groups in a molecule thereof. Specific examples of the hydroxy fatty acid include ricinoleic acid, 12-hydroxystearic acid, sabinic acid, 2-hydroxytetradecanoic acid, ipurolic acid, 2-hydroxyhexadecanoic acid, jalapinolic acid, juniperic acid, ambrettolic acid, aleuritic acid, 2-hydroxyoctadecanoic acid, 18-hydroxyoctadecanoic acid, 9,10-dihydroxyoctadecanoic acid, kamlolenic acid, ferron acid, and cerebronic acid. The hydroxy fatty acids may be used alone or in combination thereof.

The alcohol ester of the condensed hydroxy fatty acid may be obtained by subjecting the condensed hydroxy fatty acid and an alcohol to an esterification reaction. The alcohol ester of the condensed hydroxy fatty acid may be obtained, for example, by mixing the condensed hydroxy fatty acid and an alcohol with each other, adding an alkali catalyst such as caustic soda or an acid catalyst such as phosphoric acid to the obtained mixture, and removing reaction water under heating. The degree of progress of esterification in this reaction may be recognized by measuring an acid value, a saponification value, a hydroxyl value, or the like. Also in the condensed hydroxy fatty acid used in this case, the condensation degree is preferably 2 or more, more preferably 4 or more as described above.

Examples of the alcohol include: monohydric alcohols, such as methyl alcohol, ethyl alcohol, and isopropyl alcohol; and dihydric alcohols, such as ethylene glycol and propylene glycol. A polyhydric alcohol may also be used as the alcohol. Examples of the polyhydric alcohol include: alkane polyols, such as pentaerythritol and glycerin; polyalkane polyols serving as polymers of the alkane polyol; sugars such as sucrose; and sugar derivatives typified by sugar alcohols, such as sorbitol and mannitol. Those alcohols may be used alone or in combination thereof.

Specific examples of the condensed hydroxy fatty acid and/or the alcohol ester thereof (C) synthesized by using the above-mentioned compound as a raw material include: condensed ricinoleic acid obtained by dehydration condensation of ricinoleic acid; condensed 12-hydroxystearic acid obtained by dehydration condensation of 12-hydroxystearic acid; condensed ricinoleic acid hexaglycerin ester serving as an ester of condensed ricinoleic acid and hexaglycerin serving as a glycerin hexamer; condensed ricinoleic acid tetraglycerin ester serving as an ester of condensed ricinoleic acid and tetraglycerin serving as a glycerin tetramer; condensed 12-hydroxystearic acid propylene glycol ester serving as an ester of condensed 12-hydroxystearic acid and propylene glycol; and condensed linoleic acid propylene glycol ester serving as an ester of condensed ricinoleic acid and propylene glycol. Those compounds may be used alone or in combination thereof.

The content of the condensed hydroxy fatty acid and the alcohol ester thereof (C) is preferably from 0.1 part by weight to 10 parts by weight, more preferably from 0.2 part by weight to 8 parts by weight, still more preferably from 0.3 part by weight to 5 parts by weight, yet still more preferably from 0.4 part by weight to 5 parts by weight with respect to 100 parts by weight of the resins in the ultra-high molecular weight stretched film A. When the content falls within such ranges, a resin composition excellent in fluidity can be prepared, and the ultra-high molecular weight stretched film A that sufficiently exhibits characteristics derived from the ultra-high molecular weight polyethylene-based resin (A) can be obtained. The "content of the condensed hydroxy fatty acid and the alcohol ester thereof (C)" means the total content of the condensed hydroxy fatty acid and the alcohol ester of the condensed hydroxy fatty acid. Thus, when the ultra-high molecular weight stretched film A includes only the condensed hydroxy fatty acid as the compound (C), the "content of the condensed hydroxy fatty acid and the alcohol ester thereof (C)" means the content of the condensed hydroxy fatty acid. In addition, when the ultra-high molecular weight stretched film A includes only the alcohol ester of the condensed hydroxy fatty acid as the compound (C), the "content of the condensed hydroxy fatty acid and the alcohol ester thereof (C)" means the content of the alcohol ester of the condensed hydroxy fatty acid.

(Other Component)

The ultra-high molecular weight stretched film A may further include any appropriate additive as required. Examples of the additive include: stabilizers, such as a fluidity modifier, an anti-build up agent, a heat stabilizer, and a weathering agent; colorants, such as a pigment and a dye; a lubricant; a cross-linking agent; a cross-linking aid; an antiblocking agent; an antistatic agent; an anti-fog agent; an organic filler; and an inorganic filler.

Examples of the fluidity modifier include various silicone oils, such as polydimethylsiloxane, a liquid lubricant, various aliphatic compounds or metal salts thereof, an alicyclic compound, various waxes, a solid lubricant, and various surfactants, and mixtures thereof. In one embodiment, a fatty acid amide (preferably erucamide) is used as the fluidity modifier. The content of the fatty acid amide is, for example, from 0.05 part by weight to 1 part by weight with respect to 100 parts by weight of the resin for forming the ultra-high molecular weight stretched film A. When the fatty acid amide is added as described above, the thin film formability of the ultra-high molecular weight stretched film A is improved.

Examples of the silicone oils include dimethyl polysiloxane type, methyl hydrogen polysiloxane type, both-terminal hydrogen polysiloxane type, methyl phenyl polysiloxane type, alkyl-modified silicone type, amino-modified silicone type, carboxyl-modified silicone type, higher fatty acid-modified silicone type, epoxy-modified silicone type, vinyl group-containing silicone type, alcohol-modified silicone type, polyether-modified silicone type, alkyl polyether-modified silicone type, and fluorine-modified silicone type silicone oils.

Examples of the liquid lubricant include: synthesized lubricating oils, such as a polyglycol oil, a polyphenyl ether oil, an ester oil, a phosphate oil, a polychlorotrifluoroethylene oil, a fluoroester oil, a chlorinated biphenyl oil, and a silicone oil; and an ethylene-$\alpha$-olefin copolymer synthesized lubricating oil.

Examples of the aliphatic compounds include: fatty acids, such as capric acid, lauric acid, myristic acid, palmitic acid, stearic acid, and oleic acid; fatty acid amides, such as ethylenebisstearamide, stearic acid amide, oleamide, erucamide, ethylenebisoleamide, capramide, lauramide, palmitamide, stearylamide, behenamide, hydroxystearamide, N-oleyl palmitamide, N-stearyl stearamide, N-stearyl oleamide, N-oleyl stearamide, N-stearyl erucamide, methylol stearamide, methylenebisstearamide, ethylenebiscapramide, ethylenebislauramide, ethylenebishydroxystearamide, ethylenebisbehenamide, hexamethylenebisstearamide, hexamethylenebisbehenamide, hexamethylene hydroxystearamide, N,N'-distearyl adipamide, N,N'-distearyl sebacamide, ethylenebiserucamide, hexamethylenebisoleamide, N,N'-dioleyl adipamide, and N,N'-dioleyl sebacamide; ether compounds of fatty acids, such as dioctyl ether $\{(C_8H_{17})_2O\}$, didecyl ether $\{(C_{10}H_{25})_2O\}$, didodecyl ether $\{(C_{12}H_{25})_2O\}$, and dioctadecyl ether $\{(C_{18}H_{37})_2O\}$; ketone compounds of fatty acids, such as methyl tetradecyl ketone $\{CH_3CO(CH_2)_{13}CH_3\}$, n-propyl hexadecyl ketone $\{CH_3(CH_2)_2CO(CH_2)_{15}CH_3\}$, didodecyl ketone $\{CH_3(CH_2)_{11}CO(CH_2)_{11}CH_3\}$, and dioctadecyl ketone $\{CH_3(CH_2)_{17}CO(CH_2)_{17}CH_3\}$; ester compounds of fatty acids, such as octyl laurate $\{CH_3(CH_2)_{10}COO(CH_2)_7CH_3\}$, ethyl palmitate $\{CH_3(CH_2)_{14}COOCH_2CH_3\}$, butyl stearate $\{CH_3(CH_2)_{16}COO(CH_2)_3CH_3\}$, and octyl stearate $\{CH_3(CH_2)_{16}COO(CH_2)_7CH_3\}$; and aliphatic alcohols, such as lauryl alcohol, myristyl alcohol, cetyl alcohol $(CH_3(CH_2)_{14}CH_2OH)$, heptadecyl alcohol $(CH_3(CH_2)_{15}CH_2OH)$, stearyl alcohol $(CH_3(CH_2)_{16}CH_2OH)$, ceryl alcohol $(CH_3(CH_2)_{24}CH_2OH)$, and behenyl alcohol $(CH_3(CH_2)_7C(CH)_{11}CHOH)$.

Examples of the fatty acid metal salts include calcium stearate, magnesium stearate, barium stearate, lithium stearate, sodium stearate, zinc stearate, zinc laurate, zinc behenate, calcium montanate, magnesium montanate, barium montanate, lithium montanate, sodium montanate, zinc montanate, calcium behenate, magnesium behenate, barium behenate, lithium behenate, sodium behenate, zinc behenate, calcium laurate, magnesium laurate, barium laurate, lithium laurate, sodium laurate, zinc laurate, calcium 12-hydroxystearate, magnesium 12-hydroxystearate, barium 12-hydroxystearate, lithium 12-hydroxystearate, and sodium 12-hydroxystearate.

Examples of the alicyclic compound include an esterified rosin, a cyclic terpene resin, a terpene resin derivative, and a polycyclopentadiene-based resin or a dicyclopentadiene-based petroleum resin obtained by polymerization of polycyclopentadiene, hydrogenated polycyclopentadiene, or dicyclopentadiene serving as a main component through addition of 1,3-pentadiene, a conjugated diolefin, or the like.

Examples of the waxes include: a n-alkane having 22 or more carbon atoms, such as n-nonane, n-decane, n-undecane, n-dodecane, n-tetradecane, n-octadecane, docosane, tricosane, tetracosane, or triacontane, or a mixture with a lower n-alkane containing any such component as a main component; a so-called paraffin wax separated and purified from petroleum, ethylene or a medium or lower polyethylene wax that is a low molecular weight polymer obtained by copolymerizing ethylene and another $\alpha$-olefin, a high-pressure method polyethylene wax, an ethylene copolymer wax, or a wax obtained by decreasing the molecular weight of polyethylene, such as medium- and low-pressure method polyethylene or high-pressure method polyethylene, by thermal degradation or the like, and an oxide of any such wax or the oxidized wax modified with, for example, maleic acid; a wax modified with maleic acid; a montanoic acid ester-based wax; and a wax of a fatty acid derivative (example: a dicarboxylic acid ester, a glycerin fatty acid ester, or an amide wax).

Examples of the solid lubricant include graphite, molybdenum disulfide, boron nitride, tungsten disulfide, lead oxide, glass powder, and a metal soap.

Examples of the surfactants include glycerin monostearate, hardened palm oil monoglyceride, oleic acid monoglyceride, a hardened rapeseed oil fatty acid mono/diglyceride, self-emulsifying stearic acid mono/diglyceride, oleic acid mono/diglyceride, caprylic acid monoglyceride, lauric acid monoglyceride, capric acid monoglyceride, caprylic acid mono/diglyceride, caprylic acid diglyceride, diglycerin mono/dioleate, diglycerin mono/distearate, diglycerin monostearate, decaglycerin pentaoleate, decaglycerin pentastearate, decaglycerin pentastearate, decaglycerin decaoleate, decaglycerin decastearate, pentaglycerin trioleate, pentaglycerin hexastearate, decaglycerin monolaurate, decaglycerin monomyristate, decaglycerin monooleate, decaglycerin monostearate, decaglycerin distearate, pentaglycerin monolaurate, pentaglycerin monomyristate, pentaglycerin monooleate, pentaglycerin monostearate, sorbitan monostearate, sorbitan monooleate, sorbitan trioleate, propylene glycol monostearate, and propylene glycol monooleate.

Examples of the anti-build up agent include a fluorine-based elastomer, a 12-hydroxystearic acid metal salt, a basic 12-hydroxystearic acid metal salt, and a carboxylic acid amide-based wax.

Examples of the antistatic agent include a low molecular weight surfactant type antistatic agent and a high molecular weight type antistatic agent. Examples of the low molecular weight surfactant type antistatic agent include: a quaternary ammonium salt; a pyridinium salt; a cationic antistatic agent having a cationic group, such as a primary, secondary, or tertiary amino group; an anionic antistatic agent having an anionic group, such as a sulfonic acid base, a sulfate base, a phosphate base, or a sulfonic acid base; an amphoteric antistatic agent, such as an amino acid antistatic agent or an amino sulfate antistatic agent; and a nonionic antistatic agent, such as an amino alcohol antistatic agent, a glycerin antistatic agent, or a polyethylene glycol antistatic agent. Examples of the high molecular weight type antistatic agent include: nonionic high molecular weight antistatic agents, such as polyethylene oxide, polypropylene oxide, polyethylene glycol, polyether ester amide, polyether ester, polyether polyolefin, and an ethylene oxide-epichlorohydrin-based copolymer; anionic high molecular weight antistatic agents, such as polystyrene sulfonic acid; and cationic high molecular weight antistatic agents, such as a quaternary ammonium base-containing acrylate polymer, a quaternary ammonium base-containing styrene polymer, and a quaternary ammonium base-containing polyethylene glycol methacrylate-based copolymer.

In addition, from the viewpoint of imparting an antistatic function, a conductive substance may be used. Examples of the conductive substance include a metal, a metal oxide, particles each coated with a metal or a metal oxide, an inorganic metal salt compound, a carbon-based material, a modified silicone material, an ionic organic compound, a nonionic organic compound, a conductive polymer, and an ionic liquid. Examples of the metal include gold, silver, platinum, copper, nickel, iron, palladium, aluminum, gallium, indium, and tin. Examples of the metal oxide include zinc oxide, antimony oxide, tin oxide, cerium oxide, indium oxide, indium tin oxide (ITO), a metal-doped tin oxide, and a metal-doped zinc oxide. An example of the metal-doped tin oxide is antimony-doped tin oxide (ATO). Examples of the inorganic metal salt compound include a metal silicate, a metal titanate, an alkali metal sulfate, an alkali metal nitrate, an alkali metal perchlorate, an alkali metal sulfonate, an alkali metal carboxylate, a metal complex of tetrafluoroboric acid, and a metal complex of hexafluorophosphoric acid. Examples of the carbon-based material include carbon black, graphite, a carbon fiber, a carbon nanotube, a fullerene, and graphene. A conductivity-imparting agent is, for example, a conductive filler. Examples of the conductive filler include carbon-based, metal-based, metal oxide-based, and metal-coated conductive fillers. Examples of the carbon-based conductive filler include Ketjen black, acetylene black, and oil furnace black. Examples of a metal for forming the metal-based conductive filler include Ag, Ni, Cu, Zn, Al, and stainless steel. Examples of a metal oxide for forming the metal oxide-based conductive filler include $SnO_2$, $In_2O_3$, and ZnO. A filler using, for example, Ni or Al as a coating material, and using, for example, mica, glass beads, glass fibers, carbon fibers, calcium carbonate, zinc oxide, or titanium oxide as a base filler is adopted as the metal-coated conductive filler.

In one embodiment, the carbon-based conductive filler (preferably Ketjen black) is used. The content of the carbon-based conductive filler is, for example, from 2 parts by weight to 20 parts by weight with respect to 100 parts by weight of the resins in the resin composition. When the carbon-based conductive filler is added as described above, it is possible to obtain a resin composition capable of being formed into a molded body having a surface specific resistance value (for example, $10^3$ $\Omega/\square$ to $10^5$ $\Omega/\square$) set appropriately.

Examples of the colorants include: organic pigments, such as perylene red (C.I. Pigment Red 178), quinacridone red (C.I. Pigment Red 122, 202), anthraquinone yellow (C.I. Pigment Yellow 147), benzimidazolone yellow (C.I. Pigment Yellow 180, 181), monoazo lake yellow (C.I. Pigment Yellow 183), copper phthalocyanine blue (C.I. Pigment Blue 15-1), and copper phthalocyanine green (C.I. Pigment Green 7); and inorganic pigments, such as titanium dioxide (C.I. Pigment White 6), zinc sulfide (C.I. Pigment White 22), carbon black (C.I. Pigment Black 7), sintered black (C.I. Pigment Black 28), bismuth vanadate yellow (C.I. Pigment Yellow 184), nickel-titanium yellow (C.I. Pigment Yellow 53), chromium titanium yellow (C.I. Pigment Brown 24), red oxide (C.I. Pigment Red 101), chromium oxide (C.I. Pigment Green 17), cobalt green (C.I. Pigment Green 19), ultramarine (C.I. Pigment Blue 29), cobalt blue (C.I. Pigment Blue 28), ultramarine violet (C.I. Pigment Violet 15), and aluminum (C.I. Pigment matal 1).

(Method of producing Ultra-high Molecular Weight Stretched Film A)

The ultra-high molecular weight stretched film A may be produced by any appropriate method including stretching by molten sheet roll forming. The production method is, for example, a method including: preparing the above-mentioned resin composition containing the ultra-high molecular weight polyethylene-based resin (A); and subjecting the resin composition to the molten sheet roll forming. As described above, the resin composition may further contain the thermoplastic resin (B), the condensed hydroxy fatty acid and/or the alcohol ester thereof (C), and an additive to be added as required.

In one embodiment, the above-mentioned resin composition may be prepared by melting and kneading the ultra-high molecular weight polyethylene-based resin (A), the thermoplastic resin (B), the condensed hydroxy fatty acid and/or the alcohol ester thereof (C), and the additive to be added as required. As the melting and kneading method, there are given, for example, methods using a single-screw extruder, a multi-screw extruder, a tandem extruder, and a Banbury mixer. When the above-mentioned resins are melted and kneaded in the presence of the condensed hydroxy fatty acid and/or the alcohol ester thereof (C), the occurrence of a massive substance can be suppressed, and a resin composition having a satisfactory resin dispersion state can be obtained.

It is preferred that the processing temperature in the above-mentioned melting and kneading be a temperature at which the resins included in the resin composition can be melted. The temperature is preferably from 120°C to 350°C, more preferably from 140°C to 330°C, still more preferably from 150°C to 300°C, particularly preferably from 160°C to 250°C.

The molten sheet roll forming refers to a forming method including rolling the resin composition between two or more rolls to form a film having a predetermined thickness. Typically, the resin composition that has been melted and kneaded, and has been discharged from a T-die is subjected to the rolling. In the present invention, the adoption of the molten sheet roll forming can provide the ultra-high molecular weight stretched film A having the above-mentioned characteristics. A polishing roll system to be used in T-die extrusion molding or calender forming is suitably used as such molten sheet roll forming. Examples of the T-die extrusion molding include a horizontally arranged roll system and a vertical arrangement system. The number of the rolls is preferably 3 or more, and a facility including a mechanism capable of rolling between the respective rolls may be used. A calender forming apparatus is, for example, a two-series calender, a three-series calender, a four-series calender, an S-type calender, a reverse L-type calender, a Z-type calender, or an oblique Z-type calender.

The lip clearance of the T-die is preferably from 0.2 mm to 5 mm, more preferably from 1 mm to 3 mm. The temperature of the outlet of the T-die is preferably from 150°C to 300°C, more preferably from 200°C to 280°C. The temperature of the T-die may be adjusted in accordance with a desired resin composition temperature.

The number of times of the rolling may be one, or may be two or more. When the number of times of the rolling is set to two or more, an improvement in strength (an improvement in MD tensile strength or an improvement in MD modulus of elasticity) of the film to be obtained can be achieved, and the ultra-high molecular weight stretched film A having a large crystal orientation degree can be obtained. The number of times of the rolling is preferably from 2 to 6, more preferably from 2 to 4.

The rolling rolls are preferably heated. The temperature of each of the rolling rolls is preferably from 90°C to 200°C, more preferably from 100°C to 180°C, still more preferably from 120°C to 160°C. The temperatures of the plurality of rolling rolls may be identical to or different from each other.

A linear pressure to be applied to each of the rolling rolls is preferably from 15 kg/cm to 300 kg/cm, more preferably from 30 kg/cm to 200 kg/cm, still more preferably from 50 kg/cm to 150 kg/cm.

A processing speed in the calender forming may be set to any appropriate speed.

The method of producing the ultra-high molecular weight stretched film A may include a stretching step (e.g., a roll stretching step or a tenter stretching step). The stretching step may be performed, for example, after the molten sheet roll forming. For example, MD stretching with rolls may be adopted as a method for the stretching. A MD stretching ratio is, for example, from 1.1 times to 5 times. The stretching of the film at such ratio can provide a polyethylene laminate excellent in strength with high formability. In addition, the stretching method is not limited to the MD stretching, and the ultra-high molecular weight stretched film A may be obtained through, for example, TD stretching such as tenter stretching.

The ultra-high molecular weight stretched film A may be subjected to any appropriate surface treatment. For example, the performance of the surface treatment can provide a polyethylene laminate excellent in adhesiveness between the ultra-high molecular weight stretched film A and the low molecular weight ethylene-based resin layer. Examples of the surface treatment include corona treatment, flame treatment, and plasma treatment.

In addition, the ultra-high molecular weight stretched film A may be subjected to deposition treatment with aluminum, alumina, silicon dioxide, or the like, or may be coated with a gas barrier resin such as polyvinylidene chloride.

A-2. Anchor Coat Layer

In one embodiment, the polyethylene laminate includes the anchor coat layer between the ultra-high molecular weight stretched film A and the low molecular weight ethylene-based resin layer. Such polyethylene laminate may be obtained by forming the low molecular weight ethylene-based resin layer on the anchor coat layer of the ultra-high molecular weight stretched film A with an anchor coat layer. The ultra-high molecular weight stretched film A with an anchor coat layer may be obtained by applying any appropriate anchor coat agent onto the ultra-high molecular weight stretched film A. Examples of the anchor coat agent include a polyurethane-based adhesive, an isocyanate-based adhesive, a polyethyleneimine-based adhesive, and a polybutadiene-based adhesive. The polyurethane-based adhesive or the isocyanate-based adhesive is preferably an adhesive including: at least one or more kinds of polyol components each having at least two or more hydroxy groups in a molecule thereof; and at least one or more kinds of polyisocyanate components each having at least two or more isocyanate groups in a molecule thereof and/or diisocyanates. The polyol components may be appropriately selected from, for example, polyester polyol, polyether polyol, acrylic polyol, and polyolefin polyol. Examples of the diisocyanates may include: aromatic diisocyanates, such as 4,4'-, 2,4'-, or 2,2'-diisocyanatodiphenylmethane, 1,5-diisocyanatonaphthaline, 4,4'-diisocyanatodicyclohexylmethane, 1,4-diisocyanatobenzene, and/or 2,4- or 2,6-diisocyanatotoluene; and aliphatic and alicyclic diisocyanates, such as 1,6-diisocyanatohexane, 1,10-diisocyanatodecane, 1,3-diisocyanatocyclopentane, 1,4-diisocyanatocyclohexane, and 1-isocyanato-3,3,5-trimethyl-3 or -5-isocyanatomethanecyclohexane. The polyisocyanate component may be produced from those diisocyanate monomers. Such anchor coat agent may be appropriately selected from commercial products. A product available under the product name "NIPPOLAN 3228" from Tosoh Corporation or the like is commercially available as the polyurethane-based adhesive, and a product available under the product name "TOYOBINE" from Tosoh Corporation or the like is commercially available as the polyethyleneimine-based adhesive.

The thickness of the anchor coat layer is preferably from 0.01 $\mu$m to 0.7 um. When the thickness falls within such range, a polyethylene laminate excellent in recyclability can be obtained. The thickness of the anchor coat layer is more preferably from 0.01 um to 0.3 um, still more preferably from 0.01 um to 0.1 um. When the thickness falls within such ranges, a polyethylene laminate excellent in adhesive property between the ultra-high molecular weight stretched film A and the low molecular weight ethylene-based resin layer can be obtained.

A-3. Low Molecular Weight Ethylene-based Resin Layer

The thickness (total thickness) of the low molecular weight ethylene-based resin layer is preferably from 5 $\mu$m to 150 um, more preferably from 10 $\mu$m to 100 $\mu$m, still more preferably from 20 um to 80 $\mu$m. When the thickness falls within such ranges, a polyethylene laminate excellent in adhesive property between the ultra-high molecular weight stretched film A and the low molecular weight ethylene-based resin layer can be obtained.

Any appropriate ethylene-based resin may be used as a material for forming the low molecular weight ethylene-based resin layer. The ethylene-based resin may be a homopolymer of ethylene, or may be a copolymer of ethylene and a monomer copolymerizable with ethylene. Examples of the ethylene-based resin include high-density polyethylene, an ethylene-$\alpha$-olefin copolymer, high-pressure method low-density polyethylene, an ethylene-vinyl acetate copolymer, an ethylene-unsaturated carboxylic acid copolymer, an ethylene-unsaturated carboxylic acid ester copolymer, an ethylene-carbon monoxide copolymer, and an ethylene-styrene copolymer. In one embodiment, the low molecular weight ethylene-based resin layer contains at least one kind selected from high-pressure method low-density polyethylene, an ethylene-$\alpha$-olefin copolymer, an ethylene-vinyl acetate copolymer, and an ethylene-acrylic acid ester copolymer.

Methods of producing the high-density polyethylene and the ethylene-$\alpha$-olefin copolymer are not particularly limited, and examples thereof may include high-, medium-, and low-pressure ionic polymerization methods each including using a Ziegler-Natta catalyst, a Phillips catalyst, or a metallocene catalyst. Such resins may be appropriately selected from commercial products. The resins are commercially available under, for example, the respective product names "NIPOLON HARD", "NIPOLON-L", and "NIPOLON-Z" from Tosoh Corporation. Examples of an $\alpha$-olefin for forming the ethylene-$\alpha$-olefin copolymer may include propylene, 1-butene, 1-pentene, 1-hexene, 1-heptene, 1-octene, 1-nonene, and 1-decene. A method of producing the high-pressure method low-density polyethylene may be, for example, high-pressure radical polymerization. Such resin may be appropriately selected from commercial products, and is commercially available under, for example, the product name "PETROTHENE" from Tosoh Corporation. Examples of a method of producing the ethylene-vinyl acetate copolymer include known production methods, such as high-pressure method radical polymerization, solution polymerization, and emulsion polymerization. Such resin may be appropriately selected from commercial products, and is commercially available as an ethylene-vinyl acetate copolymer under the product name "ULTRATHENE" from Tosoh Corporation. The high-pressure method low-density polyethylene, the ethylene-$\alpha$-olefin copolymer, and the ethylene-vinyl acetate copolymer are preferred as ethylene-based polymers because of their excellent adhesive properties, and in particular, a mixture of the high-pressure method low-density polyethylene and the ethylene-$\alpha$-olefin copolymer is most preferred because the mixture is excellent in adhesive property and extrusion lamination processability.

The density of the ethylene-based resin for forming the low molecular weight ethylene-based resin layer is preferably from 860 kg/m$^3$ to 955 kg/m$^3$, more preferably from 870 kg/m$^3$ to 930 kg/m$^3$, most preferably from 870 kg/m$^3$ to 915 kg/m$^3$. When the density falls within such ranges, a low molecular weight ethylene-based resin layer excellent in adhesive property with the ultra-high molecular weight stretched film A can be formed. The density of the ethylene-based resin is measured in conformity with JIS K 6922-1 (1997).

The melt flow rate of the ethylene-based resin for forming the low molecular weight ethylene-based resin layer is preferably from 0.1 g/10 min to 30 g/10 min, more preferably from 0.5 g/10 min to 25 g/10 min, still more preferably from 3 g/10 min to 20 g/10 min. A resin having a melt flow rate within such ranges is advantageous in that the resin is excellent in formability at the time of the production of the polyethylene laminate.

The melting point of the ethylene-based resin for forming the low molecular weight ethylene-based resin layer is preferably from 50°C to 140°C, more preferably from 70°C to 130°C. The melting point of the ethylene-based resin may be measured with a measuring machine DSC6220 (manufactured by Seiko Instruments Inc.) by increasing the temperature thereof from a start temperature of 30°C to 230°C at a rate of temperature increase of 10°C/min and decreasing the temperature to 30°C at a rate of temperature decrease of 10°C/min.

The low molecular weight ethylene-based resin layer may further contain any appropriate additive as required. In one embodiment, the low molecular weight ethylene-based resin layer may contain a tackifier. The formation of the low molecular weight ethylene-based resin layer containing the tackifier can provide a polyethylene laminate excellent in adhesiveness between the low molecular weight ethylene-based resin layer and the ultra-high molecular weight stretched film A.

Examples of the tackifier include: a petroleum resin, such as an aliphatic petroleum resin, an aliphatic hydrogenated petroleum resin, an aromatic petroleum resin, an aromatic hydrogenated petroleum resin, an alicyclic petroleum resin, an alicyclic hydrogenated petroleum resin, or a copolymerization-type hydrogenated petroleum resin; a coumarone resin; a styrene-based resin; a rosin-based resin that is a natural resin-based tackifier; a methyl ester-based resin; a glycerin ester-based resin; a pentaerythritol ester-based resin; a terpene-based resin; and modified products thereof. Of those tackifiers, a tackifier formed of at least one kind selected from the group consisting of: a petroleum resin; a terpene resin; and a rosin-based resin is preferred from the viewpoint of an improvement in adhesive property.

The softening point of the tackifier measured by a ring and ball method falls within the range of preferably from 90°C or more to 140°C or less, more preferably from 100°C or more to 135°C or less, still more preferably from 105°C or more to 130°C or less. When the softening point falls within the ranges, the blocking of the film after the forming is reduced, and the property by which the adhesive strength thereof is held under a low-temperature environment becomes suitable.

A commercial product may be used as the tackifier. Specific examples thereof may include: petroleum resins, such as ARKON P-100, ARKON P-125, ARKON P-140, ARKON M-90, ARKON M-115, and ARKON M-135 (product names) (all of which are manufactured by Arakawa Chemical Industries, Ltd.), I-MARV S-110 and I-MARV P-125 (product names) (all of which are manufactured by Idemitsu Kosan Co, Ltd.), and T-REZ RC115 and T-REZ HA125 (product names) (all of which are manufactured by JXTG Nippon Oil & Energy Corporation); rosin-based resins, such as Pinecrystal KE-311 (product name) (manufactured by Arakawa Chemical Industries, Ltd.); and terpene-based resins, such as YS RESIN PX 1150 and YS RESIN PX 1150 N (product names) (all of which are manufactured by Yasuhara Chemical Co., Ltd.).

The content of the tackifier is preferably from 1 part by weight to 30 parts by weight, more preferably from 5 parts by weight to 40 parts by weight with respect to 100 parts by weight of the ethylene-based resin for forming the low molecular weight ethylene-based resin layer. When the content falls within such ranges, a polyethylene laminate excellent in adhesiveness between the low molecular weight ethylene-based resin layer and the ultra-high molecular weight stretched film A can be obtained.

Examples of the other additive include: an additive to be typically used in polyolefin, such as an antioxidant, a lubricant, a neutralizer, an antiblocking agent, a surfactant, or a slip agent; and a thermoplastic resin such as any other polyolefin.

The number of the low molecular weight ethylene-based resin layers may be set to two or more as required. When the number of the low molecular weight ethylene-based resin layers is two or more, the configurations of the respective layers may be identical to or different from each other. In one embodiment, the polyethylene laminate includes a high-pressure method low-density polyethylene layer and an ethylene-$\alpha$-olefin copolymer layer as the low molecular weight ethylene-based resin layers. The high-pressure method low-density polyethylene layer is advantageous in that the layer is excellent in lamination property, and the ethylene-$\alpha$-olefin copolymer layer is advantageous in that the layer has high heat-sealing strength. In another embodiment, the polyethylene laminate includes an ethylene-$\alpha$-olefin copolymer layer having a density of 910 kg/m$^3$ or less and an ethylene-1-hexene copolymer layer or an ethylene-1-octene copolymer layer as the low molecular weight ethylene-based resin layers. The ethylene-$\alpha$-olefin copolymer layer having a density of 910 kg/m$^3$ or less is advantageous in that the layer is excellent in adhesive property with the ultra-high molecular weight stretched film A, and the ethylene-1-hexene copolymer layer or the ethylene-1-octene copolymer layer is advantageous in that the layer has high heat-sealing strength.

B. Method of producing Polyethylene Laminate

The polyethylene laminate may be produced by extruding and laminating a composition for forming the low molecular weight ethylene-based resin layer (composition containing the ethylene-based resin) of a molten film shape onto the ultra-high molecular weight stretched film A or the anchor coat layer surface of the ultra-high molecular weight stretched film A having arranged thereon an anchor coat layer. Examples of such method include various extrusion lamination processing methods, such as a single lamination processing method, a tandem lamination processing method, a sandwich lamination processing method, and a coextrusion lamination processing method. When the number of the low molecular weight ethylene-based resin layers is two or more, the tandem lamination processing method, the sandwich lamination processing method, or the coextrusion lamination processing method is particularly preferred. The temperature of the resin in an extrusion lamination method preferably falls within the range of from 200°C to 350°C, and the surface temperature of a cooling roll preferably falls within the range of from 10°C to 50°C. When the composition is subjected to extrusion lamination processing, an ozone gas may be blown thereonto for obtaining a satisfactory adhesive property. In that case, the temperature of the ethylene-based polymer extruded from a die is preferably 200°C or more. In addition, the throughput of the ozone gas is preferably 0.5 mg or more per 1 $m^2$ of the film formed of the resin composition for extrusion lamination of the present invention extruded from the die.

### C. Composite

In one embodiment, the polyethylene laminate may be used while being laminated together with any other film as required. Examples of the other film include a polypropylene film, a polyester film, such as polyethylene terephthalate or polybutylene terephthalate, a polyamide film, such as nylon 6 or nylon 66, an ethylene-vinyl acetate copolymer saponified product film, a polyvinyl alcohol film, a polyvinyl chloride film, a polyvinylidene chloride film, a polycarbonate film, and a cellulose-based film. It is preferred that, when the polyethylene laminate includes a layer formed of a material except the polyethylene-based resin, the content of the material except the polyethylene-based resin in the polyethylene laminate be 10 wt% or less.

In addition, the other film may be subjected to deposition treatment with aluminum, alumina, silicon dioxide, or the like, or may be coated with a gas barrier resin such as polyvinylidene chloride.

### D. Recycling of Polyethylene Laminate (Recycled Polyethylene Pellet)

The polyethylene laminate is excellent in recyclability because a polyethylene-based material accounts for a large part thereof. In one embodiment, there is provided a recycled polyethylene pellet including the heat-sealing polyethylene laminate. The recycled polyethylene pellet may be a pellet recycled from the heat-sealing polyethylene laminate by any appropriate method. Examples of a method for the recycling include: a material recycling method including melting and kneading the polyethylene laminate to provide a pellet; and chemical recycling including thermally decomposing the polyethylene laminate to provide a low molecular weight hydrocarbon. Of those, a material recycling method is particularly preferred because the method requires low cost and low energy.

A melting and kneading apparatus to be used in the recycling of the polyethylene laminate is not particularly limited as long as the apparatus can uniformly disperse the polyethylene laminate, and a resin-kneading apparatus to be typically used may be used. For example, a kneading apparatus, such as a single-screw extruder, a twin-screw extruder, a multiscrew extruder, a Banbury mixer, a pressure kneader, a rotary roll, or an internal mixer, may be used. Of those, a twin-screw extruder is more preferred because the extruder is excellent in dispersibility and continuous productivity.

Although a screw revolution number when the kneading is performed with the twin-screw extruder is not particularly limited, the kneading is performed at preferably 50 rpm or more and 3,000 rpm or less, more preferably 300 rpm or more and 3,000 rpm or less. A screw revolution number of 50 rpm or more is preferred because the dispersibility of the respective mixed components is improved, and hence the physical properties of the resultant resin become excellent, and a screw revolution number of 3,000 rpm or less is preferred because the deterioration of the resin due to excessive shear heating does not occur, and hence the physical properties of the resultant pellet become excellent.

When an extruder is used in a kneading step, a resin composition kneaded with the extruder, preferably the resin composition kneaded therewith under a high-speed shearing condition of 50 rpm or more and 3,000 rpm or less may be used as a raw material. In addition, a molded body obtained by subjecting the composition as it is to extrusion molding with the extruder may be used as a molded article.

The recycled polyethylene pellet may include an additive, such as an antistatic agent, a light stabilizer, a UV absorber, a nucleating agent, a lubricant, an antioxidant, an antiblocking agent, a fluidity modifier, a release agent, a flame retardant, a colorant, an inorganic neutralizer, a hydrochloric acid absorber, a filler, a conductive agent, a chain length extender, or an anti-hydrolysis agent, to the extent that the effects of the present invention are not impaired.

### Examples

Now, the present invention is specifically described by way of Examples, but the present invention is by no means limited to these Examples. "Parts" and "%" are based on a weight unless otherwise stated. Evaluation methods in Examples and Comparative Examples are as described below.

### [Crystal Orientation Degree]

The two-dimensional wide-angle X-ray diffractometry of an ultra-high molecular weight stretched film was performed by using SmartLab (manufactured by Rigaku Corporation) as a measuring machine and by using a CuKα ray as an X-ray source. An azimuth angle distribution curve derived from a (110) plane present at $2\theta$ was determined from the resultant wide-angle diffraction image, and the half-width of a peak present at each of 0° and 180° was measured, followed by the determination of the crystal orientation degree of the film from the following equation.

```
Crystal orientation degree=(360-half-width×2)/360
```

[Tensile Strength]

Measurement was performed with a measuring machine EZ-SX (manufactured by Shimadzu Corporation) in conformity with JIS K 7161. A measurement temperature was set to 23°C.

[Modulus of Elasticity]

Measurement was performed with a measuring machine EZ-SX (manufactured by Shimadzu Corporation) in conformity with JIS K 7161. A measurement temperature was set to 23°C.

[Moisture Permeability]

The amount (g) of water vapor passing through a sample having a diameter of 80 mm in 24 hours under the conditions of a temperature of 40°C and a humidity of 90%RH was measured by using a measuring machine L80-5000 (manufactured by Lyssy) in conformity with the moisture permeability test of JIS K 7129 (humidity detection sensor method). A measurement temperature was set to 23°C.

[DSC Measurement]

The DSC measurement of an ultra-high molecular weight stretched film was performed with a measuring machine DSC6220 (manufactured by Seiko Instruments Inc.) by: increasing the temperature thereof from a start temperature of 30°C to 230°C at a rate of temperature increase of 10°C/min; holding the temperature at 230°C for 3 minutes; then decreasing the temperature to 30°C at a rate of temperature decrease of 10°C/min; and then increasing the temperature to 230°C at the same rate.

[Melt Mass Flow Rate]

Measurement was performed with a melt indexer (manufactured by Takara Kogyo Co., Ltd.) on the basis of JIS K 6924-1 (under the conditions of 190°C and a load of 2,160 g).

[Density of Ethylene-based Resin]

Measurement was performed in conformity with JIS K 6922-1 (1997).

[Adhesive Strength]

A stretched film layer and a low molecular weight ethylene-based resin layer were peeled from each other with a tensile tester (TENSILON RTE-1210 manufactured by Orientec Corporation) at a sample width of 15 mm and a tensile rate of 300 mm/min so that an angle between the layers became 180°, followed by the measurement of the strength of the peeling. A measurement temperature was set to 23°C.

[Heat-sealing Strength]

A hot tack tester (manufactured by Tester Sangyo Co., Ltd.) was used to bring low molecular weight ethylene-based resin layers into contact with each other, and to subject the layers to heat sealing by vertical heating at a sealing temperature of 130°C and a sealing pressure of 0.2 MPa for a sealing time of 1 second. After that, under an environmental temperature of 23°C, the layers were peeled from each other with a tensile tester (TENSILON RTE-1210 manufactured by Orientec Corporation) at a sample width of 15 mm and a tensile rate of 300 mm/min so that an angle between the layers became 180°, followed by the measurement of heat-sealing strength at that time.

[Tear Strength]

Measurement was performed with an Elmendorf tear strengthmeasuring machine (manufactured by Toyo Seiki Seisaku-sho, Ltd.) in conformity with JIS K 7128-2.

[Impact Strength]

Measurement was performed with Film Impact Tester (manufactured by Toyo Seiki Seisaku-sho, Ltd.) in conformity with JIS P 8134.

[Recyclability]

Each of laminates obtained in Examples was cut, and was melted and extruded with a twin-screw extruder (manufactured by Technovel Corporation) at a temperature of 200°C, followed by the evaluation of the outer appearance of the resultant strand. When no protruding foreign matters were observed, the laminate was judged to be excellent in recyclability (o), and when the number of the protruding foreign matters was remarkably large, the laminate was judged to be poor in recyclability ($\times$). When the foreign matters were slightly observed, the laminate was judged to be excellent in recyclability to some extent ($\Delta$).

[Example 1]

59 Parts by weight of ultra-high molecular weight polyethylene A1 having a viscosity-average molecular weight of 2,000,000 (manufactured by Asahi Kasei Corporation, product name: SUNFINE UH850), 39 parts by weight of a thermoplastic resin B1 (polyethylene, manufactured by Asahi Kasei Corporation, product name: "SUNTEC J300P", MFR: 40 g/10 min), and 2 parts by weight of a compound C1 (condensed tetraglycerin ricinoleate; condensation degree of a hydroxy fatty acid: 10) were mixed to provide a resin composition.
The resin composition was melted with a single-screw extruder (cylinder temperature: 230°C), and was extruded from a T-die (lip clearance: 2 mm, width: 700 mm, die temperature: 240°C). The sheet in a molten state was fed to calender rolls (roll temperature: 150°C), and was rolled between the first and second rolls (linear pressure: 80 kg/cm, processing speed: 3 m/min) directly below the T-die to provide an ultra-high molecular weight stretched film (thickness: 30 um).
An ethylene-1-hexene copolymer (manufactured by Tosoh Corporation, product name: "NIPOLON ZZF230-1", MFR: 2 g/10 min, density: 920 kg/m$^3$) was molded into a film with an inflation molding machine (manufactured by Placo Co., Ltd.). Thus, an ethylene-1-hexene copolymer film having a thickness of 50 $\mu$m was obtained.
Low-density polyethylene (manufactured by Tosoh Corporation, product name: "PETROTHENE 203", MFR: 8 g/10 min, density: 919 kg/m$^3$) serving as a composition for forming a low molecular weight ethylene-based resin layer (I) was subjected to sandwich lamination molding (processing temperature: 330°C, processing speed: 50 m/min) between the ultra-high molecular weight stretched film and the ethylene-1-hexene copolymer film (a low molecular weight ethylene-based resin layer (II)) with an extrusion laminator (manufactured by Sumitomo Heavy Industries Modern, Ltd.). Thus, a polyethylene laminate (ultra-high molecular weight stretched film/low molecular weight ethylene-based resin layer (I) (thickness: 30 $\mu$m)/low molecular weight ethylene-based resin layer (II) (thickness: 50 $\mu$m)) was obtained.

[Example 2]

An ultra-high molecular weight stretched film was obtained in the same manner as in Example 1. The surface of the ultra-high molecular weight stretched film was subjected to corona treatment with a corona treatment machine (manufactured by Kasuga Denki, Inc.) under the condition of 1.3 W/m$^2$·h. Thus, an ultra-high molecular weight stretched film (thickness: 30 um) was obtained.
A polyethylene laminate (ultra-high molecular weight stretched film/low molecular weight ethylene-based resin layer (I) (thickness: 30 $\mu$m)/low molecular weight ethylene-based resin layer (II) (thickness: 50 um)) was obtained in the same manner as in Example 1 except that the ultra-high molecular weight stretched film was used as an ultra-high molecular weight stretched film. The ultra-high molecular weight stretched film was arranged so that the corona-treated surface of the film was on the low molecular weight ethylene-based resin layer side.

[Example 3]

A polyethylene laminate (ultra-high molecular weight stretched film/low molecular weight ethylene-based resin layer (I) (thickness: 30 um)/low molecular weight ethylene-based resin layer (II) (thickness: 50 um)) was obtained in the same manner as in Example 1 except that an ethylene-1-butene copolymer (manufactured by Tosoh Corporation, product name: "LUMITAC BL600K", MFR: 21 g/10 min, density: 900 kg/m$^3$) was used as a composition for forming a low molecular weight ethylene-based resin layer (I).

[Example 4]

An ultra-high molecular weight stretched film was obtained in the same manner as in Example 1. The surface of the ultra-high molecular weight stretched film was subjected to corona treatment with a corona treatment machine (manufactured by Kasuga Denki, Inc.) under the condition of 1.3 W/m$^2$·h. Thus, an ultra-high molecular weight stretched film (thickness: 30 pm) was obtained.

A polyethylene laminate (ultra-high molecular weight stretched film/low molecular weight ethylene-based resin layer (I) (thickness: 30 $\mu$m)/low molecular weight ethylene-based resin layer (II) (thickness: 50 $\mu$m)) was obtained in the same manner as in Example 3 except that the ultra-high molecular weight stretched film was used as an ultra-high molecular weight stretched film. The ultra-high molecular weight stretched film was arranged so that the corona-treated surface of the film was on the low molecular weight ethylene-based resin layer side.

[Example 5]

An ultra-high molecular weight stretched film was obtained in the same manner as in Example 1. The surface of the ultra-high molecular weight stretched film was subjected to corona treatment with a corona treatment machine (manufactured by Kasuga Denki, Inc.) under the condition of 1.3 W/m$^2$·h. Thus, an ultra-high molecular weight stretched film (thickness: 30 um) was obtained. An anchor coat agent (a mixture of a product available under the product name "TAKELAC A3210" from Mitsui Chemicals, Inc. and a product available under the product name "TAKENATE A3072" therefrom) was applied to the corona-treated surface of the ultra-high molecular weight stretched film so as to have an application thickness of 0.2 um. Thus, an ultra-high molecular weight stretched film (thickness: 30 um) with an anchor coat layer was obtained.

A polyethylene laminate (ultra-high molecular weight stretched film/anchor coat layer (thickness: 0.2 $\mu$m)/low molecular weight ethylene-based resin layer (I) (thickness: 30 um)/low molecular weight ethylene-based resin layer (II) (thickness: 50 $\mu$m)) was obtained in the same manner as in Example 1 except that the ultra-high molecular weight stretched film was used as an ultra-high molecular weight stretched film.

[Example 6]

A film including a polyethylene laminate (ultra-high molecular weight stretched film/low molecular weight ethylene-based resin layer (I) (thickness: 30 $\mu$m)/low molecular weight ethylene-based resin layer (II) (thickness: 50 um)) was obtained in the same manner as in Example 1 except that a mixture of 90 parts by weight of an ethylene-$\alpha$-olefin copolymer (manufactured by Tosoh Corporation, product name: "LUMITAC BL600K", MFR: 21 g/10 min, density: 900 kg/m$^3$) and 10 parts by weight of a tackifier (manufactured by Arakawa Chemical Industries, Ltd., product name: "ARKON P120") was used as a composition for forming a low molecular weight ethylene-based resin layer (I).

[Example 7]

60 Parts by weight of ultra-high molecular weight polyethylene A2 having a viscosity-average molecular weight of 1,200,000 (manufactured by Celanese Corporation, product name: GUR 4012), 39 parts by weight of a thermoplastic resin B1 (polyethylene, manufactured by Asahi Kasei Corporation, product name: SUNTEC J300P, MFR: 40 g/10 min), and 1 part by weight of a compound C1 (condensed tetraglycerin ricinoleate; condensation degree of a hydroxy fatty acid: 10) were mixed to provide a resin composition.

An ultra-high molecular weight stretched film (thickness: 30 $\mu$m) was obtained in the same manner as in Example 5 except that the resin composition was used.

A film including a polyethylene laminate (ultra-high molecular weight stretched film/anchor coat layer (thickness: 0.2 $\mu$m)/low molecular weight ethylene-based resin layer (I) (thickness: 30 $\mu$m)/low molecular weight ethylene-based resin layer (II) (thickness: 50 $\mu$m)) was obtained in the same manner as in Example 1 except that the ultra-high molecular weight stretched film was used as an ultra-high molecular weight stretched film.

[Example 8]

An ultra-high molecular weight stretched film was obtained in the same manner as in Example 1.

The ultra-high molecular weight stretched film and the ethylene-1-hexene copolymer serving as a composition for forming a low molecular weight ethylene-based resin layer (manufactured by Tosoh Corporation, product name: "NIPOLON Z-HL610K", MFR: 21 g/10 min, density: 910 kg/m$^3$) were subjected to extrusion lamination molding (processing temperature: 330°C, processing speed: 50 m/min) with an extrusion laminator (manufactured by Sumitomo Heavy Industries Modern, Ltd.). Thus, a polyethylene laminate (ultra-high molecular weight stretched film/low molecular weight ethylene-based resin layer (thickness: 50 um)) was obtained.

[Example 9]

An ultra-high molecular weight stretched film was obtained in the same manner as in Example 1. An anchor coat agent (a mixture of a product available under the product name "TAKELAC A3210" from Mitsui Chemicals, Inc. and a product available under the product name "TAKENATE A3072" therefrom) was applied to the surface of the ultra-high molecular weight stretched film so as to have an application thickness of 0.2 um. Thus, an ultra-high molecular weight stretched film (thickness: 30 um) with an anchor coat layer was obtained.

A polyethylene laminate (ultra-high molecular weight stretched film/anchor coat layer (thickness: 0.2 $\mu$m)/low molecular weight ethylene-based resin layer (thickness: 50 $\mu$m)) was obtained in the same manner as in Example 8 except that the ultra-high molecular weight stretched film was used as an ultra-high molecular weight stretched film.

[Example 10]

A polyethylene laminate was obtained in the same manner as in Example 5 except that: an anchor coat agent (manufactured by Tosoh Corporation, product name: "TOYOBINE 210K") was used as an anchor coat agent; and the thickness of an anchor coat layer was set to 0.05 um.

[Comparative Example 1]

A resin composition formed of high-density polyethylene A3 having a viscosity-average molecular weight of 210,000 (manufactured by Tosoh Corporation, product name: "NIPOLON HARD 7300") was prepared.

A film was obtained in the same manner as in Example 1 except that the resin composition was used.

[Comparative Example 2]

59 Parts by weight of ultra-high molecular weight polyethylene A4 having a viscosity-average molecular weight of 1,000,000 (manufactured by Asahi Kasei Corporation, product name: SUNFINE UH650), 39 parts by weight of a thermoplastic resin B1 (polyethylene, manufactured by Asahi Kasei Corporation, product name: "SUNTEC J300P", MFR: 40 g/10 min), and 0.5 part by weight of a compound C (condensed tetraglycerin ricinoleate; condensation degree of a hydroxy fatty acid: 10) were mixed to provide a resin composition.

The resin composition was melted with a single-screw extruder, and was extruded from a ring-shaped die, followed by inflation molding. Thus, an unstretched film was obtained.

An ethylene-1-hexene copolymer (manufactured by Tosoh Corporation, product name: "NIPOLON ZZF230-1", MFR: 2 g/10 min, density: 920 kg/m$^3$) was molded into a film with an inflation molding machine (manufactured by Placo Co., Ltd.). Thus, an ethylene-1-hexene copolymer film having a thickness of 50 $\mu$m was obtained.

Low-density polyethylene (manufactured by Tosoh Corporation, product name: "PETROTHENE 203", MFR: 8 g/10 min, density: 919 kg/m$^3$) serving as a composition for forming a low molecular weight ethylene-based resin layer (I) was subjected to sandwich lamination molding (processing temperature: 330°C, processing speed: 50 m/min) between the resultant unstretched film and ethylene-1-hexene copolymer film (a low molecular weight ethylene-based resin layer (II)) with an extrusion laminator (manufactured by Sumitomo Heavy Industries Modern, Ltd.). Thus, a polyethylene laminate (unstretched film/low molecular weight ethylene-based resin layer (I) (thickness: 30 um)/low molecular weight ethylene-based resin layer (II) (thickness: 50 $\mu$m)) was obtained.

[Comparative Example 3]

59 Parts by weight of ultra-high molecular weight polyethylene A1 having a viscosity-average molecular weight of 2,000,000 (manufactured by Asahi Kasei Corporation, product name: SUNFINE UH850), 39 parts by weight of a thermoplastic resin B1 (polyethylene, manufactured by Asahi Kasei Corporation, product name: SUNTEC J300P, MFR:

40 g/10 min), and 2 parts by weight of a compound C1 (condensed tetraglycerin ricinoleate; condensation degree of a hydroxy fatty acid: 10) were mixed to provide a resin composition.

The resin composition was melted with a single-screw extruder (cylinder temperature: 230°C), and was extruded from a T-die (lip clearance: 2 mm, width: 700 mm, die temperature: 240°C). The sheet in a molten state was fed to calender rolls (roll temperature: 150°C), and was rolled between the first and second rolls (linear pressure: 80 kg/cm, processing speed: 3 m/min) directly below the T-die to provide a stretched film.

[Reference Example]

A film was obtained in the same manner as in Example 5 except that a biaxially stretched polyamide film (manufactured by Toyobo Co., Ltd., product name: TOYOBO HARDEN FILM N1102) was used instead of the ultra-high molecular weight stretched film A1. The film is not formed of a single resin, and is hence poor in recyclability.

<Evaluation>

The polyethylene laminates obtained in Examples, Comparative Examples, and Reference Example were subjected to the following evaluations. The results are shown in Table 1.

Table 1

| | | | Example 1 | Example 2 | Example 3 | Example 4 | Example 5 | Example 6 | Example 7 | Example 8 | Example 9 | Example 10 | Comparative Example 1 2 | Comparative Example | Comparative Example 3 | Reference Example |
|---|---|---|---|---|---|---|---|---|---|---|---|---|---|---|---|---|---|
| Ultra-high molecular weight stretched film | Ultra-high molecular weight polyethylene | A | A1 | A1 | A1 | A1 | A1 | A1 | A2 | A1 | A1 | A1 | A3 | A4 | A1 | (Nylon film) |
| | | Molecular weight | 2,000,000 | 2,000,000 | 2,000,000 | 2,000,000 | 2,000,000 | 2,000,000 | 1,200,000 | 2,000,000 | 2,000,000 | 2,000,000 | 210,000 | 1,000,00 | 2,000,00 00 | - |
| | | Addition amount (part(s) by weight) | 59 | 59 | 59 | 59 | 59 | 59 | 60 | 59 | 59 | 59 | 100 | 59 | 59 | - |
| | Thermoplastic resin | B | B1 | B1 | B1 | B1 | B1 | B1 | B1 | B1 | B1 | B1 | | B1 | B1 | - |
| | | Addition amount (part(s) by weight) | 39 | 39 | 39 | 39 | 39 | 39 | 39 | 39 | 39 | 39 | | 39 | 39 | - |
| | Compound C | | C1 | C1 | C1 | C1 | C1 | C1 | C1 | C1 | C1 | C1 | | C1 | C1 | - |
| | | Addition amount (part(s) by weight) | 2 | 2 | 2 | 2 | 2 | 2 | 1 | 2 | 2 | 2 | | 2 | 2 | - |
| | Crystal orientation degree | | 0.972 | 0.972 | 0.972 | 0.972 | 0.972 | 0.972 | 0.977 | 0.972 | 0.972 | 0.972 | Unmeasurable | Unmeasurable | 0.972 | - |
| | Tensile strength (MPa) | | 346 | 346 | 346 | 346 | 346 | 346 | 258 | 346 | 346 | 346 | 30 | 67 | 346 | |
| | Modulus of elasticity (MPa) | | 10,539 | 10,539 | 10,539 | 10,539 | 10,539 | 10,539 | 5,471 | 10,539 | 10,539 | 10,539 | 550 | 360 | 10,539 | |
| | 30 $\mu$m-converted moisture permeability (g/m$^2$·d) | | 6.4 | 6.4 | 6.4 | 6.4 | 6.4 | 6.4 | 9.2 | 6.4 | 6.4 | 6.4 | 20 | 21 | 6.4 | - |
| | DSC peak | Low temperature/ high temperature (°C) | 129/152 | 129/152 | 129/152 | 129/152 | 129/152 | 129/152 | 128/149 | 129/152 | 129/152 | 129/152 | 130 | 132 | 129/152 | |

(continued)

| | Example 1 | Example 2 | Example 3 | Example 4 | Example 5 | Example 6 | Example 7 | Example 8 | Example 9 | Example 10 | Comparative Example 1 2 | Comparative Example | Comparative Example 3 | Reference Example |
|---|---|---|---|---|---|---|---|---|---|---|---|---|---|---|
| Thickness (µm) | 30 | 30 | 30 | 30 | 30 | 30 | 30 | 30 | 30 | 30 | 30 | 50 | 30 | 15 |
| Corona treatment | Absent | Present | Absent | Present | Present | Present | Present | Absent | Absent | Present | Absent | Absent | Absent | Present |
| Low molecular weight ethylene-based resin layer — Low molecular weight ethylene-based resin layer (I): Density (kg/m³) | 919 | 919 | 900' | 900 | 919 | 900 | 919 | 910 | 910 | 919 | 919 | 919 | | 919 |
| Low molecular weight ethylene-based resin layer (I): Ethylene-based Addition amount (part(s) by weight) | 100 | 100 | 100 | 100 | 100 | 90 | 100 | 100 | 100 | 100 | 100 | 100 | | 100 |
| Low molecular weight ethylene-based resin layer (I): Tackifier Addition amount (part(s) by weight) | 0 | 0 | 0 | 0 | 0 | 10 | 0 | 0 | 0 | 0 | 0 | 0 | 0 | 0 |
| Low molecular weight ethylene-based resin layer (I): Thickness (µm) | 30 | 30 | 30 | 30 | 30 | 30 | 30 | 50 | 50 | 30 | 30 | 30 | | 30 |
| Low molecular weight ethylene-based resin layer (II): Thickness (µm) | 50 | 50 | 50 | 50 | 50 | 50 | 50 | - | - | 50 | 50 | 50 | - | 50 |
| Anchor coat layer: Thickness (µm) | - | - | - | - | 0.2 | - | 0.2 | - | 0.2 | 0.05 | - | - | - | 0.2 |
| Physical properties: Adhesive strength (N/15 mm) | 1.8 | 1.9 | 6.0 | 7.6 | 3.0 | 9.0 | 3.0 | 4.0 | 7.2 | 2.5 | 10 | 7.3 | - | ≥10 |
| Physical properties: Heat-sealing strength (N/15 mm) | 82 | 59 | 55 | 70 | 127 | 85 | 75 | 75 | 95 | 110 | 25 | 38 | 0 | 71 |
| Physical properties: Tear strength (kN/m) | 24 | 20 | 21 | 21 | 10 | 16 | 9 | 24 | 11 | 10 | 7 | 11 | - | 9 |
| Physical properties: Impact strength (kJ/m) | 9.2 | 8.9 | 9.5 | 9.5 | 10.6 | 10.0 | 9.0 | 8.7 | 9.5 | 10.9 | 7.0 | 7.5 | - | 10.4 |
| Physical properties: Recyclability | ○ | ○ | ○ | ○ | ○ | ○ | ○ | ○ | ○ | ○ | ○ | ○ | ○ | × |

As is apparent from Table 1, the polyethylene laminate of the present invention has an excellent heat-sealing property, and is excellent in physical characteristics, such as strength and impact resistance. In addition, the polyethylene laminate of the present invention is also excellent in recyclability because the laminate has a multi-layer configuration formed of the resins of the same kind.

This application claims the benefit of priority from Japanese Patent Application No. 2020-098748, filed on June 5, 2020, the disclosure of which is incorporated herein by reference in its entirety.

Industrial Applicability

The polyethylene laminate of the present invention is an easy-to-recycle material excellent not only in rigidity, strength, and impact resistance but also in adhesive property, and hence may be used as a wide variety of packaging materials including: a refill pouch; and a bag and a container for heavy objects, such as rice and a liquid.

Reference Signs List

**10** stretched film of ultra-high molecular weight polyethylene-based resin
**20** low molecular weight ethylene-based resin layer
**21** low molecular weight ethylene-based resin layer (I)
**22** low molecular weight ethylene-based resin layer (II)
**30** anchor coat layer
**100, 200, 300** heat-sealing polyethylene laminate

**Claims**

1.  A heat-sealing polyethylene laminate, comprising:

    a stretched film of an ultra-high molecular weight polyethylene-based resin (A) having a viscosity-average molecular weight of from 300,000 to 15,000,000; and
    a low molecular weight ethylene-based resin layer, which is arranged on at least one side of the stretched film of the ultra-high molecular weight polyethylene-based resin (A) and includes an ethylene-based resin.

2.  The heat-sealing polyethylene laminate according to claim 1, further comprising an anchor coat layer between the stretched film of the ultra-high molecular weight polyethylene-based resin (A) and the low molecular weight ethylene-based resin layer.

3.  The heat-sealing polyethylene laminate according to claim 2, wherein the anchor coat layer has a thickness of from 0.01 $\mu$m to 0.7 $\mu$m.

4.  The heat-sealing polyethylene laminate according to any one of claims 1 to 3, wherein the stretched film of the ultra-high molecular weight polyethylene-based resin satisfies all of the following characteristics (i) to (iv):

    (i) the stretched film has a tensile strength at 23°C of 100 MPa or more;
    (ii) the stretched film has a tensile modulus of elasticity at 23°C of 1,500 MPa or more;
    (iii) the stretched film has a 30 $\mu$m-converted moisture permeability of 15 g/m$^2$·d or less; and
    (iv) the stretched film has an endothermic peak at less than 140°C and an endothermic peak at 140°C or more in DSC measurement thereof, and the endothermic peak at 140°C or more reduces or disappears at a time of a second temperature increase thereof.

5.  The heat-sealing polyethylene laminate according to any one of claims 1 to 4, wherein the stretched film of the ultra-high molecular weight polyethylene-based resin (A) contains

    the ultra-high molecular weight polyethylene-based resin (A), and
    a condensed hydroxy fatty acid and/or an alcohol ester thereof (C).

6.  The heat-sealing polyethylene laminate according to any one of claims 1 to 5, wherein a content of the condensed hydroxy fatty acid and/or the alcohol ester thereof (C) is from 0.1 part by weight to 10 parts by weight with respect to 100 parts by weight of resins in the stretched film of the ultra-high molecular weight polyethylene-based resin.

7. The heat-sealing polyethylene laminate according to any one of claims 1 to 6, wherein the stretched film of the ultra-high molecular weight polyethylene-based resin (A) contains

   the ultra-high molecular weight polyethylene-based resin (A), and
   a thermoplastic resin (B).

8. The heat-sealing polyethylene laminate according to any one of claims 1 to 7, wherein the ethylene-based resin for forming the low molecular weight ethylene-based resin layer contains at least one kind selected from high-pressure method low-density polyethylene, an ethylene-$\alpha$-olefin copolymer, an ethylene-vinyl acetate copolymer, and an ethylene-acrylic acid ester copolymer.

9. The heat-sealing polyethylene laminate according to any one of claims 1 to 8, wherein the ethylene-based resin for forming the low molecular weight ethylene-based resin layer has a density of from 860 kg/m$^3$ to 955 kg/m$^3$.

10. The heat-sealing polyethylene laminate according to any one of claims 1 to 9,

    wherein the low molecular weight ethylene-based resin layer contains a tackifier, and
    wherein a content of the tackifier is from 1 part by weight to 30 parts by weight with respect to 100 parts by weight of the ethylene-based resin for forming the low molecular weight ethylene-based resin layer.

11. The heat-sealing polyethylene laminate according to claim 10, wherein the tackifier is at least one kind selected from the group consisting of: a petroleum resin; a terpene resin; and a rosin-based resin.

12. A recycled polyethylene pellet, comprising the heat-sealing polyethylene laminate of any one of claims 1 to 11.

**Fig.1**                                    <u>100</u>

**Fig.2**                                    <u>200</u>

**Fig.3**                                    <u>300</u>

**INTERNATIONAL SEARCH REPORT**

International application No.

PCT/JP2021/020835

**A. CLASSIFICATION OF SUBJECT MATTER**
B32B 27/32(2006.01)i; B29C 55/00(2006.01)i; C08K 5/09(2006.01)i; C08K
5/101(2006.01)i; C08L 23/04(2006.01)i
FI: B32B27/32 E; B29C55/00; C08K5/09; C08K5/101; C08L23/04
According to International Patent Classification (IPC) or to both national classification and IPC

**B. FIELDS SEARCHED**

Minimum documentation searched (classification system followed by classification symbols)
B32B1/00-43/00;    B29C55/00-55/30;    B29C61/00-61/10;    C08K3/00-13/08;
C08L1/00-101/14

Documentation searched other than minimum documentation to the extent that such documents are included in the fields searched
Published examined utility model applications of Japan          1922-1996
Published unexamined utility model applications of Japan        1971-2021
Registered utility model specifications of Japan                1996-2021
Published registered utility model applications of Japan        1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 98/43812 A1 (MITSUI CHEMICALS, INC.) 08 October 1998 (1998-10-08) claims, page 14, line 7 to page 15, line 24, page 19, lines 16-25, page 40, line 13 to page 41, line 23, examples | 1-3, 8, 9, 12<br>4-7, 10, 11 |
| Y | WO 2017/150367 A1 (SETSUNAN KASEI CO., LTD.) 08 September 2017 (2017-09-08) paragraphs [0017]-[0024], [0025]-[0032] | 4-7 |
| Y | JP 2010-137895 A (NIHON TETRA PAK KK) 24 June 2010 (2010-06-24) paragraphs [0022], [0023] | 10, 11 |
| Y | WO 2014/061403 A1 (TORAY INDUSTRIES, INC.) 24 April 2014 (2014-04-24) paragraphs [0061]-[0067] | 10, 11 |
| A | JP 2010-215705 A (ASAHI KASEI CHEMICALS CORP.) 30 September 2010 (2010-09-30) paragraph [0055] | 1 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16 August 2021 (16.08.2021) | Date of mailing of the international search report<br>24 August 2021 (24.08.2021) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

| International application No. |
|---|
| PCT/JP2021/020835 |

| Patent Documents referred in the Report | Publication Date | Patent Family | Publication Date |
|---|---|---|---|
| WO 98/43812 A1 | 08 Oct. 1998 | US 6294268 B1 claims, column 7, lines 11-56, column 9, lines 28-38, column 18, lines 16-54, examples EP 909639 A1 TW 434147 B CN 1228056 A | |
| WO 2017/150367 A1 | 08 Sep. 2017 | US 2019/0055384 A1 paragraphs [0029]-[0038], [0038]-[0046] EP 3425000 A1 CN 108884281 A TW 201803929 A | |
| JP 2010-137895 A | 24 Jun. 2010 | (Family: none) | |
| WO 2014/061403 A1 | 24 Apr. 2014 | CN 104661813 A TW 201422428 A | |
| JP 2010-215705 A | 30 Sep. 2010 | (Family: none) | |

Form PCT/ISA/210 (patent family annex) (January 2015)

**EP 4 163 110 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005104525 A
- JP 2019171860 A
- JP 2019529165 A
- JP 6262679 A
- JP 58083006 A
- JP 2020098748 A